# EUROPEAN PATENT APPLICATION

(11) **EP 4 332 351 A1**
(43) Date of publication of application: **06.03.2024**
(21) Application number: 22461603.7
(22) Date of filing: 05.09.2022
(51) Int. Cl.: F01D 11/14, F01D 25/24, F01D 11/08

(54) **TURBINE ROTOR OUTER CASING ASSEMBLY**

(71) Applicant: General Electric Company Polska Sp. Z o.o, 02-256 Warszawa (PL)
(72) Inventor: PAZINSKI, Adam, 02-390 Warszawa, ul. Grojecka 186/418 (PL); KACZMAREK, Grzegorz, 02-495 Warszawa, ul. Wojciechowskiego 36/3 (PL); KOSTROWSKI, Lukasz, 02-237 Warszawa, ul. Rakowska 16/86 (PL); MARKIEWICZ, Piotr, 02-451 Warszawa, ul. Walowicka 23/4, (PL); POREDA, Marek, 02-786 Warszawa, ul. Lachmana 4/23 (PL)
(74) Representative: Kowal, Elzbieta

(57) **Abstract**

A turbine rotor outer casing assembly (1) comprising a hanger (100) adjusted for connection to the turbine housing (21) and connected to a shroud (200), wherein the said shroud (200) is situated in the radial direction (R) between the hanger (100) and turbine blades (22), wherein the said hanger (100) has a hanger inner side (101) facing the said shroud (200) and a hanger outer side (102) facing the turbine housing (21), the said hanger (100) on the hanger outer side (102) further comprises mounting hooks (105) and each of the said mounting hooks (105) comprises an end portion (105A), bent out and extending in the longitudinal direction (L), and an intermediate portion (105B) extending in the radial direction (R), and between them is a bend (105C) having an inner side situated on the side of the turbine housing (21) cooperating therewith, the said shroud (200) being connected to the hanger (100) by means of a c-clip (106), characterized in that the hanger (100) comprises hanger stress relief means (3) formed in at least one mounting hook (105) on the inner side of the bend (105C).

## Description

### Field of Technology

The invention relates to a turbine rotor outer casing assembly. In particular, the invention relates to a turbine rotor outer casing assembly of a high pressure turbine aircraft engine.

### Prior Art

The turbine of a turbine engine comprises a turbine shaft located inside the turbine and extending in the longitudinal direction of the engine. The longitudinal direction of the engine may also be called the axial direction of the engine. On the turbine shaft there are mounted turbine blades. The turbine blades extend in the radial direction from the turbine shaft. On the turbine shaft there are mounted a plurality of blades in the peripheral direction. The blades are surrounded radially from the outside by a turbine housing. Adjacent blades are mounted with a distance on the turbine shaft in the peripheral direction. Through the peripheral gaps formed in this manner, hot gases from the combustion chamber flow, and thus they drive the turbine blades and consequently cause rotation of the shaft. Additionally, between the blades and the turbine housing there is gap in the radial direction, the so called tip clearance. The appropriate size of the radial gap is essential from the point of view of the turbine efficiency, because the energy of hot gases flowing through the radial gap is not turn into the mechanical energy of the turbine shaft rotation. In order to provide the appropriate radial gap (tip clearance) between the blades and the housing the so called shrouds are used which are fasten in the turbine housing by means of hangers. The shroud together with a hanger and intermediate elements situated therebetween form a turbine rotor outer casing assembly.

The hanger and the shroud are cooled by air. The air comes from the turbine engine compressor, flows through cooling ducts in the hanger into the space between the hanger and the shroud and then gets to the main path of the hot gases flow through the turbine. This means that, as the need for stream of the cooling air increases, a greater amount of cooling air is received from the compressor whereas the amount of air entering the combustion chamber decreases and consequently the efficiency of the turbine engine decreases.

Publication EP1749973A2 discloses a turbine rotor outer casing assembly. The assembly comprises a hanger with a front and rear hook which is mounted to the turbine housing and supports the rotor shroud in the housing. The shroud is connected to the hanger by a c-clip.

Publications US2006099078A1 and EP2937518A1 disclose longitudinal J-shaped stress relief elements. In the first publication the stress relief element is located in the rotating body and in the second publication it is situated on the static element of the turbine in the outer annular area, without direct exposure to the action of the stream hot gases flowing through the engine.

Publication US2020248559A1 discloses a uniform turbine shroud. According to the publication, the turbine shroud may be connected directly to the housing by means of extension, which may be formed integrally with the casing. The turbine shroud may be formed as a solid body such that the shroud is a single and continuous part. Due to the fact that the shroud consists of a solid body, the shroud does not require connecting and assembling various parts in order to make it and it does not require connecting and assembling various parts before the shroud is mounted in the turbine system. Instead, the shroud, after is has been formed, may be directly mounted in the turbine system.

The use of stress relief grooves in order to reduce stress concentration in the areas of notches falls within the general, common engineering knowledge.

The majority of the prior-art solutions are characterized by a great number of component parts of the turbine rotor outer casing assembly. A great number of components entails a high cost of construction (in particular resulting from a great amount of time necessary for mounting) and a high level of complexity. Moreover, due to a great number of connections between individual components there are considerable flow losses and a high need for cooling.

On the other hand, known integrated rotor outer casing assemblies are exposed to an increased mechanical stress and temperature gradients due to a greater height in the radial direction. They also require a high cooling flow in order to maintain the desired operating temperature, which reduces the general efficiency of a turbine engine and increases fuel combustion because cooling air is received from the turbine engine compressor.

C-clips that are used frequently show mechanical problems, e.g. they crack or tend to slip off. Moreover, they are made of a material with relatively low temperature resistance (compared to the remaining components of a turbine engine), so when in contact with hot gases, they are exposed to burnouts and, consequently, they fall out and release the shield to the gas path. In such a situation, it is usually required to turn off the engine during the flight and may result in the need for an emergency landing. It should also be emphasized that with the development of engine construction, the temperature of hot gases flowing through the engine increases, which additionally adversely affects the durability and reliability of constructions with the use of c-clips.

### Technical Problem Solved by the Invention

The fundamental problem being solved by this invention consists in providing an improved turbine rotor outer casing assembly which has a high mechanical strength, in particular reduced mechanical stresses and increased low-cycle strength.

The above problem is solved by means of a turbine rotor outer casing assembly according to the independent claim no. 1. Preferable embodiments and details of the invention are presented in the dependent claims 2 to 12.

Another technical problem solved by this invention is to provide a turbine rotor outer casing assembly which has high properties in respect of the thermal insulation of the turbine housing from the stream of hot gases flowing through the turbine and shows lower requirements for the use of cooling air stream.

Another technical problem solved by this invention is to provide a turbine rotor outer casing assembly which facilitates and simplifies the process of mounting the turbine engine, which has a small weight and increases the general efficiency of the engine. In particular, it is essential to eliminate c-clips.

Another technical problem solved by this invention is to provide a turbine rotor outer casing assembly which has an increased efficiency, i.e. has less paths of cooling air leakage.

### Essence

A turbine rotor outer casing assembly comprising a hanger adapted for connection with a turbine housing and connected to a shroud, wherein the said shroud is situated in the radial direction between the hanger and turbine blades, wherein the said hanger has a hanger inner side facing the said shroud and a hanger outer side facing the turbine housing; the said hanger further comprises mounting hooks on the hanger outer side and each of the said mounting hooks comprises an end portion, bent out and extending in the longitudinal direction, and an intermediate portion extending in the radial direction, and between them there is a bend having an inner side situated on the side of the turbine housing cooperating therewith, wherein the said shroud is connected to the hanger by means of a c-clip, characterized in that the hanger comprises hanger stress relief means situated on at least one mounting hook on the inner side of the bend.

Preferably, the said hanger stress relief means are in the form of a cavity shaped as a fillet by at least two radiuses tangentially connected to each other.

Preferably, the said hanger stress relief means are in the form of a cavity comprising a straight portion and a rounded portion having a fillet radius, wherein the straight portion and the rounded portion are located next to each other in the longitudinal direction whereas the rounded portion has a greater cross sectional area, as seen in the radial direction, from the straight portion.

Preferably, the assembly comprises a heat shield connected to the hanger and located on the hanger outer side in the radial direction between the hanger and the turbine housing.

Preferably, the shape of the heat shield reflects the shape of the hanger outer side or reflects the shape of the turbine housing.

Preferably, the heat shield has a shape of a straight line, polygonal chain or sinusoidal curve.

Preferably, the assembly is formed as one integrated rotor outer casing assembly with the use of an additive manufacturing technology, wherein the integrated assembly comprises a hanger portion corresponding to the hanger, a shroud portion corresponding to the shroud and a shield portion corresponding to the heat shield.

Preferably, the shroud portion on its inner side facing the turbine blades comprises at least one stress relief groove extending in the longitudinal direction.

Preferably, the stress relief groove is connected to cooling ducts providing cooling gas flow to the groove.

Preferably, the stress relief groove comprises a seal located in a seal slot and limiting the flow of hot gases into the said stress relief groove.

Preferably, the outlets of the said cooling ducts are situated adjacent to the seal.

Preferably, the said stress relief groove has a groove narrow portion in the form of a straight segment and a groove wide portion in the form of a fillet, in particular the said stress relief groove has shape similar to shape of a keyhole.

### Advantageous Effects of the Invention

The solution according to this invention, due to the use of the stress relief means, reduces rigidity of the hanger and enables a several-fold reduction of maximum stresses in the turbine rotor outer casing assembly as well as in the turbine housing in which the assembly is mounted. The stress relief means make it possible to reduce loads sufficiently enough to fulfil the requirements related to the low-cycle strength.

Moreover, the solution according to the invention, due to the use of the heat shield, makes it possible to isolate the turbine housing from the stream of hot air which flows around the turbine rotor outer casing assembly and to isolate the turbine housing from heat radiation coming from the walls of the turbine rotor outer casing assembly. In a detailed embodiment of the invention, the heat shield significantly reduces heat exchange by convection. The use of the heat shield lowers the heat stream flowing from the hot side, as a result of which there is less need for the cooling air stream and the effectiveness of cooling increases, which leads to a better control of the thermal deformation of the casing.

What is more, the solution according to the invention, due to the integral, one-part form of the turbine rotor outer casing assembly, makes it possible to facilitate and simplify the process of assembling the turbine. Reduction in the number of components of the assembly leads to a smaller number of connections between the components, which consequently limits the probability of an assembly error. Due to the integral structure of the turbine rotor outer casing assembly the critical element, i.e. the c-clip, is also eliminated, which increases reliability of the integrated turbine rotor outer casing assembly.

Moreover, the solution according to the invention, due to the use of stress relief grooves, makes it possible to create segments with a larger dimension in the peripheral direction, due to which the number of turbine elements in the peripheral direction in smaller, which translates inter alia into a higher efficiency of the turbine (due to a smaller number of potential paths of cooling air leakage).

### Advantages

The solution according to the invention makes it possible to lengthen the service life of the turbine rotor outer casing assembly, which translates into lower costs related to the maintenance of the turbine assembly.

Moreover, the solution according to the invention enables a quicker and simpler mounting of the turbine assembly.

In a preferable embodiment, the solution according to the invention ensures elimination of c-clips, increases the safety of use of the turbine engine and reduces the probability of emergency landing.

What is more, the solution according to the invention allows one to save on the manufacturing costs, reduce the weight of the turbine assembly and reduce the fuel consumption of the turbine engine in which the solution according to the invention will be used.

### Description of Figures of the Drawing

The subject matter of the invention is presented in the drawing wherein:
Figs. 1 - 3 show schematic views of the axial section of one stage of the turbine rotor with the housing with, respectively, the first, second and third embodiment of the rotor outer casing assembly according to the invention,
Figs. 4 - 6 show a schematic view of the axial sections of the hanger; Fig. 6 additionally shows the heat shield,
Fig. 7 and 8 show a schematic axial section of, respectively, the first and second embodiment of the stress relief means according to the invention,
Figs. 9 - 11 show schematic views of the axial section of one blade step of the turbine with, respectively, the first, second and third embodiment of the integrated rotor outer casing assembly according to the invention,
Fig. 12 shows a schematic perspective view of an embodiment of the integrated rotor outer casing assembly according to the invention, and
Figs. 13 -16 show schematic axial sections of, respectively, the first, second, third and fourth embodiment of the stress relief groove according to the invention.

### Description of preferable embodiments

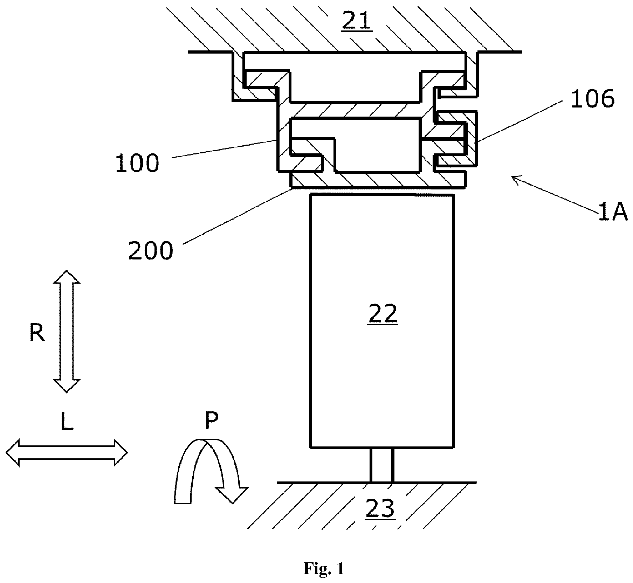

Figs. 1 - 3 show schematic views of the axial section one blade step of a turbine with rotor outer casing assembly 1 according to the invention. The turbine comprises a turbine shaft 23 extending in the longitudinal direction L, turbine blades 22 mounted on the turbine shaft 23 in the peripheral direction and extending in the radial direction R, the turbine housing 21 and the rotor outer casing assembly 1.

The turbine rotor outer casing assembly is generally marked as 1 whereas the following particular embodiments are marked sequentially as 1A, 1B and 1C.

Fig. 1 shows the first embodiment of the rotor outer casing assembly 1A. The rotor outer casing assembly 1A comprises a hanger 100, a shroud 200 and a c-clip 106. The hanger 100 is mounted in the turbine housing 21 and is connected to the shroud 200 which is located in the radial direction R between the hanger 100 and the blade 22 by means of a c-clip 106.

Although Fig. 1 shows a particular configuration of the hanger 100, the shroud 200 and the c-clip 106, these elements may also be arranged in different configurations, e.g. the c-clip 106 may be located on the opposite side, i.e. when looking at Fig. 1 - on the left side instead of the right side. Obviously, the hanger 100 and the shroud 200 may be respectively modified in such case.

The hanger is generally marked as 100, whereas the following particular embodiments are marked sequentially as 100A, 100B and 100C.

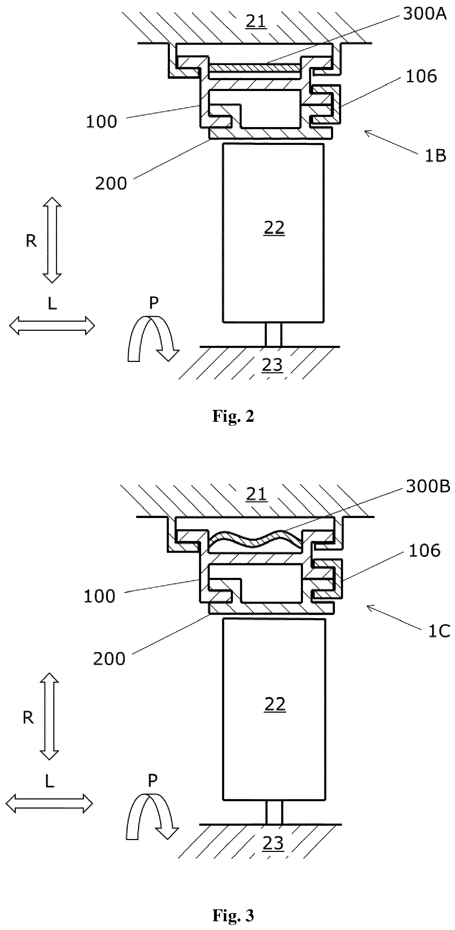

Fig. 2 shows the second embodiment of the rotor outer casing assembly 1B. Compared to the first embodiment presented in Fig. 1, the assembly 1B further comprises a heat shield 300 (the heat shield is generally marked as 300, whereas the following particular embodiments are marked sequentially as 300A, 300B and 300C) connected to the hanger 100 and located, when seen in the radial direction R, between the hanger 100 and the turbine housing 21.

The heat shield 300 improves the thermal isolation of the turbine housing 21 from the hot air flowing in the longitudinal direction L through the turbine blades 22, on the inner side of the shroud 200. Moreover, the heat shield 300 improves the thermal isolation of the turbine housing 21 from the heat radiation from the walls of the hanger 100 and shroud 200.

The heat shield 300A has a shape adjusted to the shape of the turbine housing 21. Such a shape of the heat shield 300A is determined by structure of elements in the turbine housing 21. The heat shield 300A is detachably mounted on local protrusions in the hooks of the hanger 100.

Fig. 3 shows the third embodiment of the turbine outer casing assembly 1C. Compared to the second embodiment presented in Fig. 2, the heat shield 300B has a shape that is independent of any other component of the turbine. In the presented embodiment, the heat shield 300B has, in the axial section, a shape similar to a sinusoidal curve. Such a shape of the heat shield 300B is particularly preferable for the production of the heat shield 300B by a known incremental method.

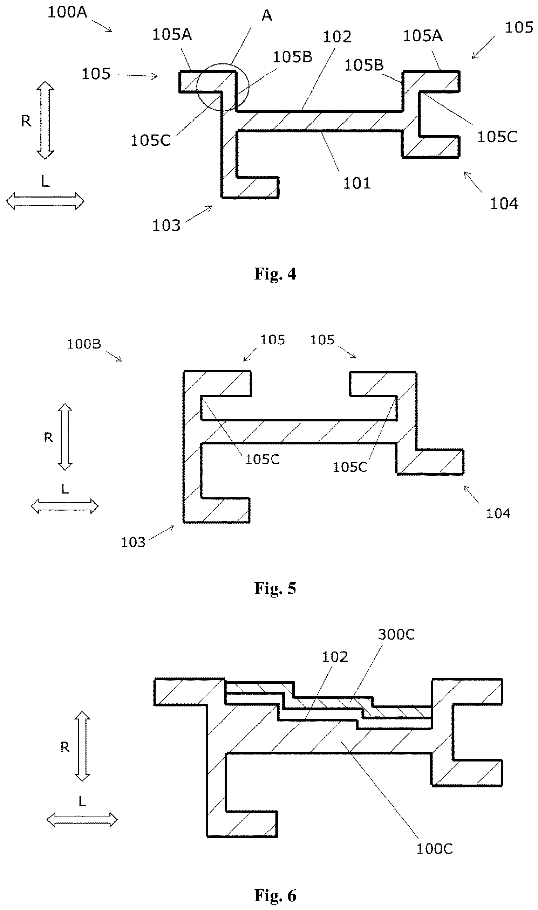

Fig. 4 shows schematically the first embodiment of the hanger 100A. The hanger 100A comprises an inner side 101 facing the shroud 200 and an outer side 102 facing the turbine housing 21. The inner side 101 is located, as seen in the radial direction R, closer to the turbine shaft 23 than the outer side 102. The shape of the inner side 101 and the outer side 102 is selected with respect to the layout of elements of the hanger 100A, i.e. their geometries are directly dependent on the geometries of the other components.

On the inner side 101, the hanger 100A comprises a front mounting flange 103 and a rear mounting flange 104, both designed for connection to the shroud 200. On the outer side 102, the hanger 100A includes two mounting hooks 105 designed for connection to the turbine housing 21.

Each mounting hook 105 comprises an end portion 105A, extending in the longitudinal direction L and an intermediate portion 105B extending in the radial direction R. Between the end portion 105A and the intermediate portion 105B there is a bend 105C. When the hanger 100A is mounted in the turbine housing 21, the inner side of the bend 105C cooperates with the mounting elements included in the turbine housing 21, as presented e.g. in Fig. 1.

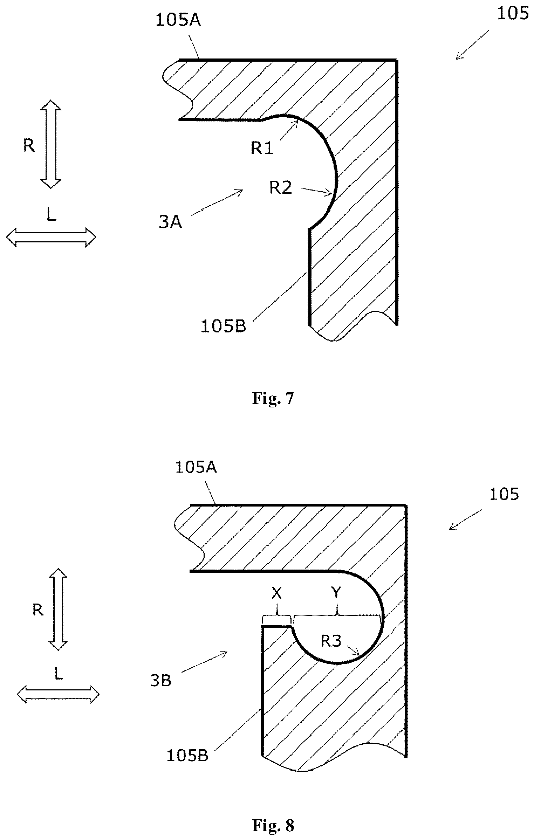

On the inner side of the bending 105C there are located stress relief means 3 (not shown in Fig. 4, see Fig. 7 and 8). The stress relief means 3 are located at each mounting hook 105 (and more specifically, on the inner side of each bend 105C), but it is also provided that the stress relief means 3 are located at only one mounting hook 105 (and more specifically, on the inner side of the only one bend 105C).

The stress relief means 3 are designed to reduce rigidity of the hanger 100 and to reduce stresses. Reduced stiffness of the hanger 100 reduces stresses both in the hanger 100 itself and in the turbine housing 21 wherein the hanger is mounted. The level of reduced stresses is low enough to make it possible to meet the requirements related to the low-cycle fatigue strength.

The stress relief means are generally marked as 3, whereas the following particular embodiments are marked sequentially as 3A and 3B.

Fig. 5 shows schematically the second embodiment of the hanger 100B. Compared to the embodiment in Fig. 4, the hanger 100B has both mounting hooks 105 facing away in opposite directions, i.e. in Fig.4 the end portions 105A are facing in opposite directions whereas in Fig. 5 the end portions are directed to each other, i.e. the inner sides of the bends 105C are opposite each other.

The configuration of the mounting hooks 105 is selected with respect to the method of mounting the hanger 100 in the turbine housing 21 and sealing options in those places. A mixed configuration is also provided, i.e. one mounting flange 105 in the configuration as in Fig. 4, and the other mounting flange in the configuration as in fig. 5. Moreover, although in the figures the mounting hooks 105 are shown as being located at the same height in the radial direction R, it is also provided that the mounting hooks 105 can be arranged at different/various heights in the radial direction R. A person skilled in the art will select a particular configuration of the hooks depending on the layout of elements in the turbine housing 21.

Fig. 6 shows schematically the third embodiment of the hanger 100C. Compared to the previous embodiments, the hanger 100C has an irregular shape of the outer space 102 which is not directly dependent on the geometry of the remaining components. Moreover, in Fig 6. the heat shield 300C is also shown. The shape of the heat shield 300C is adjusted to the shape of the outer space 102 of the hanger 100C.

Such a shape of the heat shield 300C covers the greater part of the outer side 102 of the hanger 100C and reduces the surface of heat radiation onto the turbine housing 21. Moreover, such a shape isolates and reduces the air space between the heat shield 300C and the outer side 102 of the hanger 100C and thus the air space constitutes a dead cavity, which significantly reduces heat exchange coefficients and thereby the amount of heat that gets by convection to the air flowing around the turbine housing .

Figs. 7 and 8 are detailed enlarged views of the detail A from Fig. 4 and they present, respectively, the first and second embodiment of the stress relief means according to the invention.

The first embodiment of the stress relief means 3A shaped in the mounting hooks 105, presented in Fig. 7, is particularly advantageous for the reduction of stresses in the turbine housing 21, i.e. the stress relief means 3A reduce stresses in the turbine housing 21. The stress relief means 3A are made in the form of a cavity having two fillet radiuses R1 and R2. Both fillet radiuses R1, R2 are in a tangential connection with each other. It is also provided that the stress relief means 3A are made of a larger than two number of fillet radiuses and the adjacent radiuses are in a tangential connection with each other

The second embodiment of the stress relief means 3B presented in Fig. 8 is particularly advantageous for the reduction of stresses in the hanger 100, i.e. the stress relief means 3B reduce stresses in the hanger 100. The stress relief means 3B are made in the form of a cavity having a straight portion X and a rounded portion Y with a fillet radius R3. The straight portion X and the rounded portion Y are located next to each other in the longitudinal direction L, the rounded portion Y being located deeper in the mounting hook 105 than the straight portion X. The rounded portion Y has a larger cross-sectional area, when seen in the radial direction R, than the straight portion X.

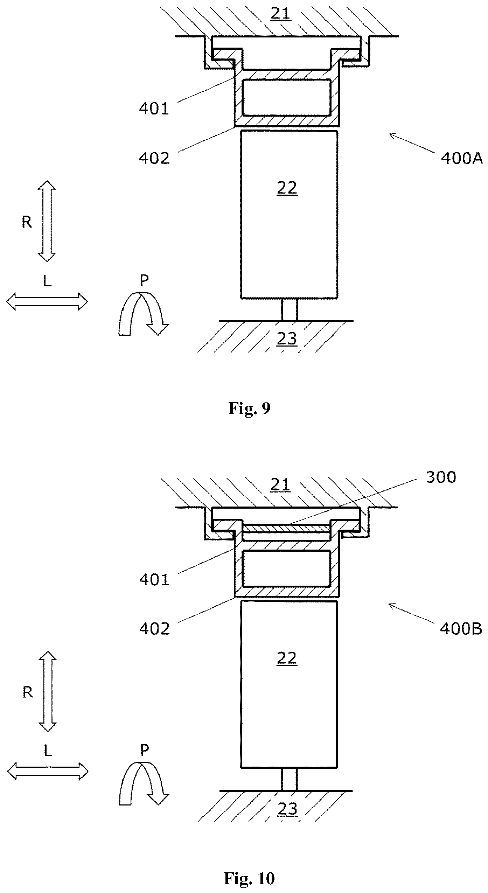

Figs. 9 - 11 show schematic views of the axial section of one turbine blade step with, respectively, the first, second and third embodiment of the integrated rotor outer casing assembly 400 according to the invention.

Compared to the turbine rotor outer casing assembly 1 presented in Figs. 1-3, wherein, first, the hanger 100 is mounted in the turbine housing 21 and then the shroud 200 is mounted in the front, in the front mounting flange 103 of the hanger 100, and in the rear by means of a c-clip, in the integrated turbine rotor outer casing assembly 400 the procedure is much simpler - it is possible to first assemble the whole peripheral ring consisting of a plurality of integrated rotor outer casing assemblies 400 placed next to one another in the peripheral direction P outside the turbine engine, in a place suitable for the assembling person, and then place such a ready-made ring in the turbine housing 21.

Integrating individual components into one whole makes it possible to reduce the number of components included in the assembly and reduce the costs of producing and assembling the turbine.

Additionally, due to the integrated formation of the turbine rotor casing assembly 400, the need to use the problematic (as described above) c-clip 106 is eliminated.

Moreover, the integrated turbine rotor outer casing assembly 400 has a reduced number of connections between its components, and thereby the value of losses resulting from leakages of cooling air through seals between the components is smaller. Consequently, the effectiveness of cooling increases and the need for the cooling air stream which is received from the turbine engine compressor decreases, which in turn translates into a higher efficiency of the turbine engine.

The integrated turbine rotor outer casing assembly is generally marked as 400 whereas the following particular embodiments thereof are sequentially marked as 400A, 400B and 400C.

The first embodiment of the integrated turbine rotor outer casing assembly 400A is presented in Fig. 9. The turbine rotor outer casing assembly 400A comprises a hanger portion 401, which corresponds to the hanger 100 of the assembly presented in Figs. 1-3, and a shroud portion 402, which corresponds to the shroud 200 of the assembly presented in Figs. 1-3. The hanger portion 401 and the shroud portion 402 are integrally formed as one whole with the use of an additive (incremental) manufacturing method. In the integrated turbine rotor outer casing assembly 400A there is no material discontinuity between the hanger portion 401 and the shroud portion 402, which material discontinuity is present between the hanger 100 and the shroud 200 in the assembly of Figs. 1-3 and therefore it needs sealing. The hanger portion 401, like the hanger 100, comprises stress relief means 3A, 3B (not shown in the drawing).

The second embodiment of the integrated turbine rotor outer casing assembly 400B is presented in Fig. 10. The integrated assembly 400B differs from the assembly presented in Fig. 9 in that it additionally comprises a heat shield 300. The heat shield 300 herein has an analogous function to that described above in relation to the rotor outer casing assembly presented in Figs. 1-3. Moreover, all the above disclosures concerning the heat shield 300 and equivalents thereof described in relation to the assembly presented in Figs. 1-3 are also applicable to the integrated assembly 400B.

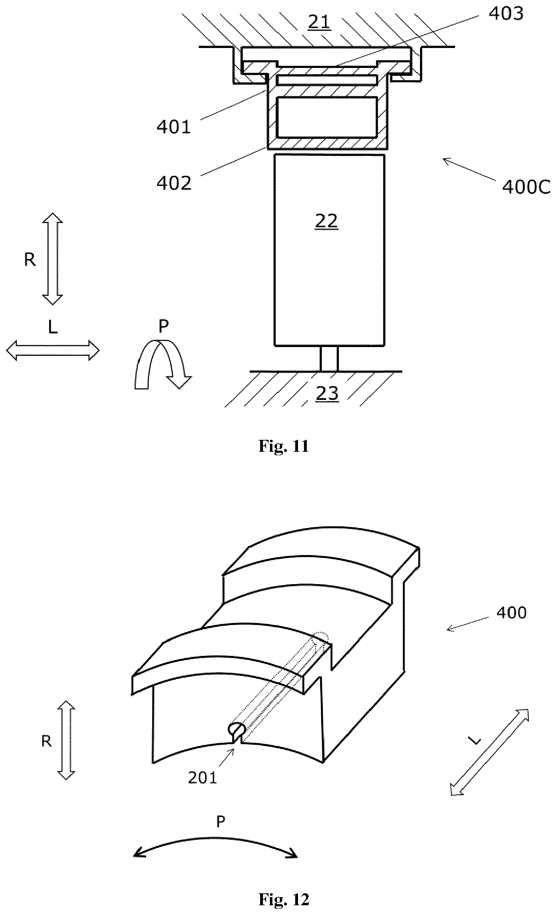

The third embodiment of the turbine integrated rotor outer casing assembly 400C is presented in Fig. 11. The integrated assembly 400C differs from the assembly presented in Fig. 10 in that the heat shield is formed integrally with the hanger portion 401 and the shroud portion 402 as a shield portion 403. All teaching described above with respect to the heat shield 300 is applicable to the shield portion 403.

Fig. 12 shows a perspective view of an embodiment of the integrated rotor outer casing assembly 400 comprising a longitudinal stress relief groove 201. The stress relief groove 201 extends in the longitudinal direction L in the shroud portion 402 of the turbine rotor integrated outer casing assembly 400. The stress relief groove 201 is open in the radial direction R towards the turbine blade 22.

Controlled use of the stress relief groove 201 cuts off the peripheral stress path in the integrated turbine outer casing assembly 400. With the same general dimension in the peripheral direction P of the turbine outer casing assembly 400, the stress relief groove 201 reduces (separates) the peripheral length of the inner side of the shroud portion 402 exposed to the action of hot gases flowing through the turbine to a plurality of smaller fragments. It reduces displacement caused by heat gradient by the wall, which makes it possible to maintain, in a more controlled manner, tip clearances between the turbine blades 22 and the integrated rotor outer casing assembly 400.

In other words, the use of stress relief means in the form of the stress relief groove 201 makes it possible to use an integrated turbine rotor outer casing assembly 400 having a larger dimension in the peripheral direction P and to reduce the number of components forming the turbine in the peripheral direction. A smaller number of components in the peripheral direction P. Additionally, a smaller number of components in the peripheral direction P results in smaller flow losses and smaller need for cooling.

Although Fig. 12 shows an integrated rotor outer casing assembly 400 with one stress relief groove 201 only, it is also provided that a plurality of stress relief grooves 201 can be made in one integrated rotor outer casing assembly 400.

The stress relief groove is generally marked as 201 whereas the following particular embodiments are sequentially marked as 201A, 201B, 201C and 201D.

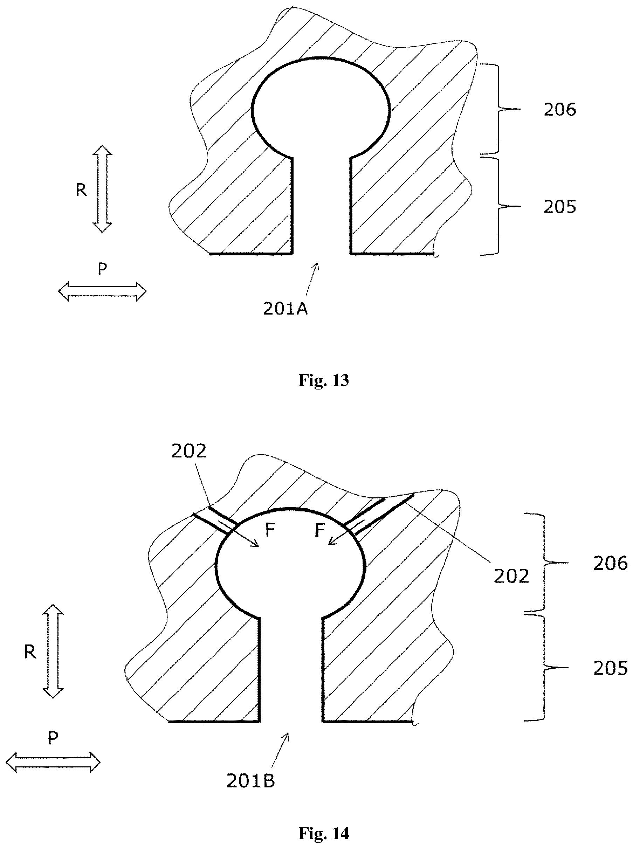

Fig. 13 shows a schematic cross-sectional view of the first embodiment of the stress relief groove 201A. The stress relief groove 201A has a shape similar to the shape of a keyhole and comprises a groove narrow portion 205 in the form of a straight segment and a groove wide portion in the form a fillet. The groove narrow portion 205 and wide portion 206 are located next to each other in the radial direction R, the groove wide portion 206 being located deeper in the shroud portion 402. The groove narrow portion 205 has a smaller cross-sectional area, as seen in the radial direction, than the groove wide portion 206.

Fig. 14 shows a schematic cross-sectional view of the second embodiment of the stress relief groove 201B. Compared to the stress relief groove 201A from Fig. 13, the stress relief groove 201B from Fig. 14 is additionally provided with cooling by means of cooling ducts 202 connected to the groove wide portion 206. The cooling ducts 202 provide cooling air flow F. In order to provide cooling, the cooling ducts 202 are in a flow connection with the turbine engine compressor.

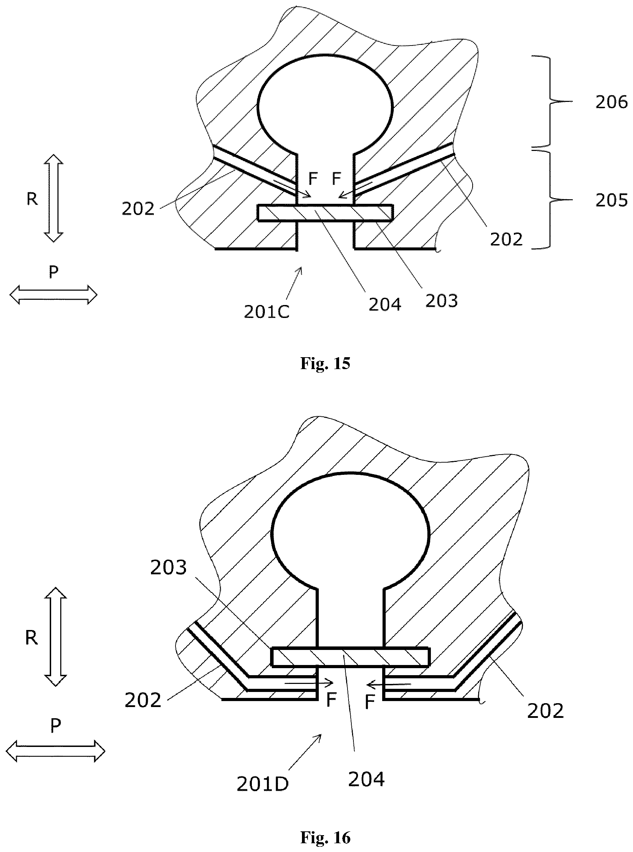

Fig. 15 shows a schematic cross-sectional view of the third embodiment of the stress relief groove 201C. Compared to the stress relief groove 201A from Fig. 13, the stress relief groove 201C additionally comprises, in the groove narrow portion 205, a seal 204 located in the groove narrow portion 205 in a seal slot 203. The seal 204 limits the flow of hot gases to the stress relief groove 201C, which improves the cooling of the groove 201C. Moreover, in the embodiment presented in Fig. 15, the cooling ducts 202 are located in such a manner that they direct the cooling air flow F over the seal 204, i.e. when seen in the radial direction R - to the side opposite the seal 204 side exposed to the action of hot gases flowing through the turbine.

Fig. 16 shows a schematic cross-sectional view of the fourth embodiment of the stress relief groove 201D. Compared to the stress relief groove 201C from Fig. 15, the cooling ducts 202 are located in such a manner that they direct the cooling air flow under the seal 204, i.e. when seen in the radial direction R - to the side exposed to the action of hot gases flowing through the turbine.

Due to the use of an incremental manufacturing method of the shroud portion 402, which constitutes part of the integrated turbine outer casing assembly, the cooling ducts 202 may have any shape, in particular a different shape than the straight one. Moreover, the cooling ducts 202 may also have any cross-sectional shape, e.g. non-circular, which additionally may vary along the length of the cooling channel 202 from the source of cooling air to the outlet.

The particular parts/components indicated and described in the particular embodiments or in the particular figures of the drawing may also be used in other embodiments (e.g. those indicated in other figures of the drawing). Similarly, the specific features of the particular parts/components indicated in a particular embodiment or a particular figure of the drawing may also be used in other analogous parts/components.

### Application

The solution according to the invention is applicable in particular in the aviation industry. It may be used in HPT turbines and LPT turbines.

Another example of the application of the solution according to the invention is provided by non-aviation turbines.

In view of the many possible embodiments to which the principles of the disclosed invention may be applied, it should be recognized that the illustrated embodiments are only preferred examples with which the invention as defined in the claims can be performed and should not be taken as limiting the scope of the invention. Rather, the scope of the invention is defined by the following claims. We therefore claim as our invention all that comes within the scope of these claims.

## Claims

1. A turbine rotor outer casing assembly (1) comprising:
a hanger (100) adjusted for connection to a turbine housing (21) and connected to a shroud (200),
wherein the said shroud (200) is situated in the radial direction (R) between the hanger (100) and turbine blades (22),
wherein the said hanger (100) has a hanger inner side (101) facing the said shroud (200) and a hanger outer side (102) facing the turbine housing (21), the said hanger (100) further comprises mounting hooks (105) on the hanger outer side (102),
and each of the said mounting hooks (105) comprises an end portion (105A), bent out and extending in the longitudinal direction (L), and an intermediate portion (105B) extending in the radial direction (R) and between them there is a bend (105C) having an inner side situated on the side the turbine housing (21) cooperating therewith,
wherein the said shroud (200) is connected to the hanger (100) by means of a c-clip (106),
**characterized in that**
the hanger (100) comprises hanger stress relief means (3) formed in at least one mounting hook (105) on the inner side of the bend (105C).

2. The assembly (1) according to claim 1, **characterized in that** the said hanger stress relief means (3) are in the form of a cavity (3A) shaped as a fillet by at least two radiuses (R1, R2) tangentially connected to each other.

3. The assembly (1) according to claim 1, **characterized in that** the said hanger stress relief means (3) are in the form of a cavity (3B) comprising a straight portion (X) and a rounded portion (Y) having a fillet radius (R3), wherein the straight portion (X) and the rounded portion (Y) are located next to each other in the longitudinal direction (L) and the rounded portion (Y) has a larger cross-sectional area, as seen in the radial direction (R), than the straight portion (X).

4. The assembly (1) according to any one of the previous claims, **characterized in that** it comprises a heat shield (300) connected to the hanger (100) and located on the hanger outer side (102) in the radial direction (R) between the hanger (100) and the turbine housing (21).

5. The assembly (1) according to claim 4, **characterized in that** the shape of the heat shield (300) reflects the shape of the hanger outer side (102) or reflects the shape of the turbine housing (21).

6. The assembly (1) according to claim 4, **characterized in that** the heat shield (300) has a shape of a straight line, polygonal chain or sinusoidal curve.

7. The assembly (1) according to any one of the previous claims, **characterized in that** the said assembly (1) is formed as one integrated rotor outer casing assembly (400) with the use of an additive technology, wherein the integrated assembly (400) comprises a hanger portion (401) corresponding to the hanger (100), a shroud portion (402) corresponding to the shroud (200) and a shield portion (403) corresponding to the heat shield (300).

8. The assembly (400) according to claim 7, **characterized in that** the shroud portion (402) on its inner side facing the turbine blades (22) comprises at least one stress relief groove (201) extending in the longitudinal direction (L).

9. The assembly (400) according to claim 8, **characterized in that** the said stress relief groove (201) is connected to cooling ducts (204) providing cooling gas flow (F) to the groove (201).

10. The assembly (400) according to claim 8 or 9, **characterized in that** the said stress relief groove (201) comprises a seal (204) located in a seal slot (203) and limiting the flow of hot gases into the said stress relief groove (201).

11. The assembly (400) according to claim 10, **characterized in that** the outlets of the said cooling ducts (202) are situated next to the seal.

12. The assembly (400) according to any one of claims 8 to 11, **characterized in that** the said stress relief groove (201) has a groove narrow portion (205) in the form of a straight segment, and a groove wide portion (206) in the form of a rounding, and in particular the said stress relief groove (201) has a shape similar to the shape of a keyhole.
